(19) Europäisches Patentamt

European Patent Office

Office européen des brevets

(11) Veröffentlichungsnummer: **0 304 881 B1**

# (12) EUROPÄISCHE PATENTSCHRIFT

(45) Veröffentlichungstag der Patentschrift: **01.04.92**

(51) Int. Cl.⁵: **G01B 7/00**, G01B 21/04

(21) Anmeldenummer: **88113739.2**

(22) Anmeldetag: **24.08.88**

(54) **Tastsystem für Koordinatenmessgeräte.**

(30) Priorität: **27.08.87 DE 3728578**

(43) Veröffentlichungstag der Anmeldung:
**01.03.89 Patentblatt 89/09**

(45) Bekanntmachung des Hinweises auf die
Patenterteilung:
**01.04.92 Patentblatt 92/14**

(84) Benannte Vertragsstaaten:
**DE FR GB SE**

(56) Entgegenhaltungen:
EP-A- 0 128 464
DE-A- 3 203 669
DE-U- 8 700 885
FR-A- 2 384 230
GB-A- 2 047 133

(73) Patentinhaber: **Firma Carl Zeiss**

**W-7920 Heidenheim (Brenz)(DE)**

(84) Benannte Vertragsstaaten:
**DE FR SE**

(73) Patentinhaber: **CARL ZEISS-STIFTUNG HANDELND ALS CARL ZEISS**

**W-7920 Heidenheim (Brenz)(DE)**

(84) Benannte Vertragsstaaten:
**GB**

(72) Erfinder: **Breyer, Karl-Hermann, Dr.**
**Hans-Holbein-Strasse 51**
**W-7920 Heidenheim(DE)**

Anmerkung: Innerhalb von neun Monaten nach der Bekanntmachung des Hinweises auf die Erteilung des europäischen Patents kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

## Beschreibung

Die Erfindung betrifft ein Tastsystem für Koordinatenmeßgeräte, mit einem ein Antastsignal liefernden Tastkopf, der eine Aufnahme für auswechselbar daran befestigte Taststifte besitzt.

Tastköpfe vom schaltenden Typ liefern ein impulsförmiges Ausgangssignal in dem Moment, in dem der Antastformkörper am Taststift des Tastkopfes das zu vermessende Werkstück berührt. Ein Tastkopf diesen Typs ist beispielsweise in der US-A 41 77 568 beschrieben. Zur Erhöhung der Genauigkeit der Erkennung des Antastvorganges besitzt dieser bekannte Tastkopf einen piezoelektrischen Sensor, der bereits bei sehr kleiner Antastkraft und damit bei der ersten Berührung des Werkstückes anspricht und ein Signal liefert, das zum Festhalten der in diesem Moment von den Maßstäben des Koordinatenmeßgerätes abgelesenen Meßwerten dient. Ein zweiter Signalimpuls wird erzeugt, wenn sich der bewegliche Taststiftträger im weiteren Verlauf der Antastbewegung aus seiner Ruhelage entfernt. Dieser zweite Impuls dient dazu, den ersten Antastimpuls zu verifizieren und gegen Störimpulse, die beispielweise durch Erschütterungen der Maschine hervorgerufen werden, zu diskriminieren.

An der beweglichen Taststiftaufnahme dieses bekannten Tastkopfes können unterschiedliche Taststiftkombinationen mit Hilfe einer Wechseleinrichtung befestigt werden, wie sie in der US-A 46 37 119 sowie in dem Prospekt Nr. 60-20-027e mit dem Titel "Probe Changing Systems" (Druckvermerk III/85) der Anmelderin beschrieben ist.

Mit diesem bekannten Tastsystem lassen sich nicht alle in der Praxis vorkommenden Meßaufgaben zufriedenstellend lösen. Bei Meßaufgaben, die sehr lange bzw. sehr schwere Taststiftkombinationen erfordern, tritt in Verbindung mit hohen Beschleunigungen beim Verfahren des Tastkopfes das Problem auf, daß der Taststiftträger aus seinem Lager ausgehoben wird und bereits beim Anfahren bzw. beim Abbremsen einen Antastvorgang vortäuscht.

Zur Lösung von Meßaufgaben, die große Taststiftlängen erfordern, ist es bekannt, anstelle eines zentralen Tastkopfes, der verschiedene Taststiftkombinationen trägt, eine Vielzahl kleiner schaltender Tastkörpfe vorzusehen, die nur einen sehr kurzen Taststift besitzen und selbst über entsprechende Verteiler oder Verlängerungen am Koordinatenmeßgerät befestigt sind. Ein derartiges Tastsystem ist beispielsweise in der deutschen Patentanmeldung DE-A-36 34 689 bzw. der gleichlautenden US-Patentanmeldung Ser.No. 105 825 sowie in der Messeinformation "Microtechnic 86" der Anmelderin (Prospekt Nr. 60-25-004-d, Druckvermerk XI/86) bekannt. Wie aus den Bildern 4 - 6 auf den Seiten 12 - 13 in der genannten Messeinformation hervorgeht, sind diese kleinen schaltenden Tastköpfe mit geringerem Durchmesser über eine als Kollisionsschutz wirkende Knickstelle am Koordinatenmeßgerät befestigt. Dieser Kollisionsschutz besitzt einen Schalter, der im Kollisionsfalle anspricht und mit der Steuerung des Koordinatenmeßgerätes verbunden ist.

Der Kollisionsschutz ist aber mit einer im Vergleich zu der Vorspannng des Taststiftträgers in einem Tastkopf des erstgenannten Typs mit sehr hoher Federkraft vorgespannt. Dies ist erforderlich, damit die Null-Lage der daran befestigten Tastkopfkombinationen mit ihrer relativ großen Masse auch dann sichergestellt ist, wenn aufgrund ihrer außeraxialen Anbringung relativ hohe Kippmomente auf den Kollisionsschutz einwirken.

Das vorstehend beschriebene System mit vielen kleinen schaltenden Tastköpfen und einem dafür vorgesehenen Kollisionsschutz ist relativ aufwendig und verteuert den Preis des damit ausgerüsteten Koordinatenmeßgerätes. Zu dem ist kein einfacher Wechsel zwischen den beiden Systemen möglich, weil hierzu das komplette System mit dem Kollisionsschutz abgebaut und dafür ein schaltender Taster des erstgenannten Typs angebaut werden müßte. Derartige Umbauten sind immer mit einem anschließenden Neukalibrieren der Tastsysteme verbunden.

Es ist die Aufgabe der vorliegenden Erfindung, ein Tastsystem der eingangs genannten Art so auszubilden, daß bei möglichst geringem Aufwand auch große Taststiftverlängerungen angebaut und mit hoher Geschwindigkeit verfahren werden können.

Diese Aufgabe wird durch ein Tastsystem und einem Verfahren zu dessen Betrieb mit den im Kennzeichen des Anspruches 1 bzw. 9 angegebenen Merkmalen gelöst.

Durch diese Maßnahmen werden die Vorteile der beiden zum Stand der Technik beschriebenen Tastsysteme miteinander vereinigt, wobei gleichzeitig ein schneller Wechsel zwischen den beiden Systemen möglich ist. So bleibt der z.B. schaltende Zentraltaster, mit dem bereits eine Vielzahl verschiedener Meßaufgaben gelöst werden können, bei einem Wechsel auf das System mit mehreren kleinen schaltenden Tastköpfen an der Maschine und dient in dieser Betriebsart als Kollisionsschutz. Der Wechsel selbst auf dieses zweistufige System kann ohne langwierige Umbauarbeiten einfach dadurch erfolgen, daß die kleinen schaltenden Tastköpfe der zweiten Art über die bereits vorhandene Tasterwechseleinrichtung anstelle der Sterntaststifte an den Zentraltaster angesetzt werden.

Für diesen Zweck ist es vorteilhaft, Kontakte zur bertragung der Antastsignale des zweiten Tastkopfes in die Taststiftaufnahme im ersten Tastkopf zu integrieren. Diese Kontakte dienen nicht nur zur Übertragung der Antastsignale des zweiten Tastkopfes auf die am ersten Tastkopf vorhandene Kabelverbindung mit der Meßmaschine sondern können außerdem dazu dienen, das eingewechselte Teil, d.h. einen starren Taststift oder den zweiten Tastkopf, zu erkennen und automatisch in die jeweils dafür erforderliche Betriebsart umzuschalten.

Während der Zentraltastkopf bei eingewechseltem starren Taster also in an sich bekannter Art und Weise betrieben wird, erfolgt nach dem Einwechseln des zweiten Tastsystems eine Umschaltung auf die Signalgeber in diesem zweiten Tastsystem und gleichzeitig wird die Vorspannung, mit dem die Taststiftaufnahme im ersten Taster in ihre Ruhelage gedrückt wird, beispielsweise über eine motorisch zusammengedrückte Feder erhöht. Der erste Tastkopf hat dann Kollisionsschutzfunktionen und die Ausgänge seiner Signalgeber werden vorteilhaft zum Zwecke der Stillsetzung der Antriebe der Meßmaschine im Kollisionsfalle an das entsprechende Steuerteil im Koordinatenmeßgerät weitergeleitet.

Weitere Vorteile der Erfindung ergeben sich aus der nachfolgenden Beschreibung eines Ausführungsbeispiels anhand der Figuren 1 - 3 der beigefügten Zeichnungen.

Fig. 1    ist eine vereinfachte Darstellung des erfindungsgemäßen zweistufigen Tastsystems bei eingewechseltem starren Taster;

Fig. 2    zeigt das zweistufige Tastsystem bei eingewechseltem schaltenden Tastkopf;

Fig. 3    ist ein Blockschaltbild der in Verbindung mit dem zweistufigen Tastsystem aus Fig. 1 bzw. Fig. 2 verwendeten Elektronik.

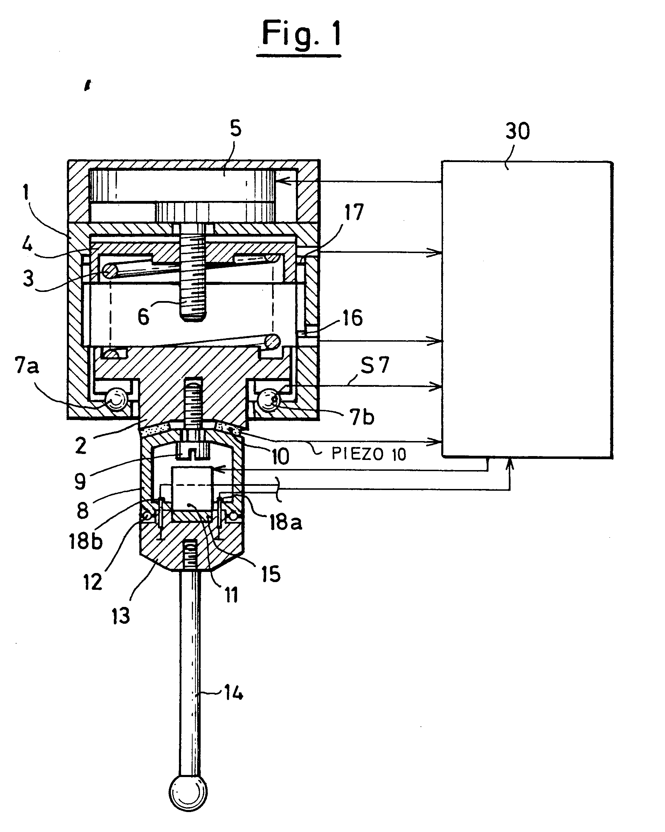

In Fig. 1 ist mit (1) das Gehäuse eines Zentraltastkopfes vom ersten Typ bezeichnet. Dieses Gehäuse kann über nicht näher dargestellte Verbindungselemente z.B. an der Pinole oder dem Querarm eines Koordinatenmeßgerätes befestigt werden.

Im Inneren des Gehäuses befindet sich ein Dreipunktlager, auf dem der bewegliche Teil (2) des Tastkopfes aufliegt. Von diesem Dreipunktlager sind nur die beiden Lagerkugeln (7a und 7b) dargestellt. Die Lagerkugeln bilden einen elektrischen Schalter, der das Abheben des beweglichen Teils (2) aus seinem Lager anzeigt. Die elektrische Verbindung zu diesem Schalter ist mit (S7) bezeichnet.

Der bewegliche Teil (2) des Tastkopfes (1) wird von einer Feder (3) in sein Lager gedrückt, die sich gegen einen im Gehäuse (1) geradgeführten und von einer Gewindespindel (6) axial verstellbaren Teller (4) abstützt. Angetrieben wird die Gewindespindel (6) von einem Motor (5) im oberen Teil des Gehäuses (1).

Die Endlage des Bereiches, in dem sich die Feder (3) verstellen läßt, ist durch zwei Mikroschalter (16 und 17) im Gehäuse (1) markiert, gegen die der Teller (4) fährt.

Am beweglichen Teil (2) des Tastkopfes ist eine Taststiftaufnahme (8) mit Hilfe einer vereinfacht als Schraube (9) dargestellten Verbindung befestigt. Zwischen der Taststiftaufnahme (8) und dem Tragteil (2) ist ein piezoelektrischer Sensor (10) angeordnet, dessen Signal zur Antasterkennung dient. Im Inneren der Aufnahme (8) befindet sich ein Elektromagnet (11) mit einem permanentmagnetischen Kern. Mit Hilfe dieser ansich bekannten Wechseleinrichtung ist das Befestigungsteil (13) eines starren Taststiftes (14) gegen ein ebenfalls wieder aus Kugeln (12) gebildetes Dreipunktlager an der Unterseite der Taststiftaufnahme (8) gezogen. Mit (15) ist der ferromagnetische Kern im Halteteil (13) für den Taststift (14) bezeichnet.

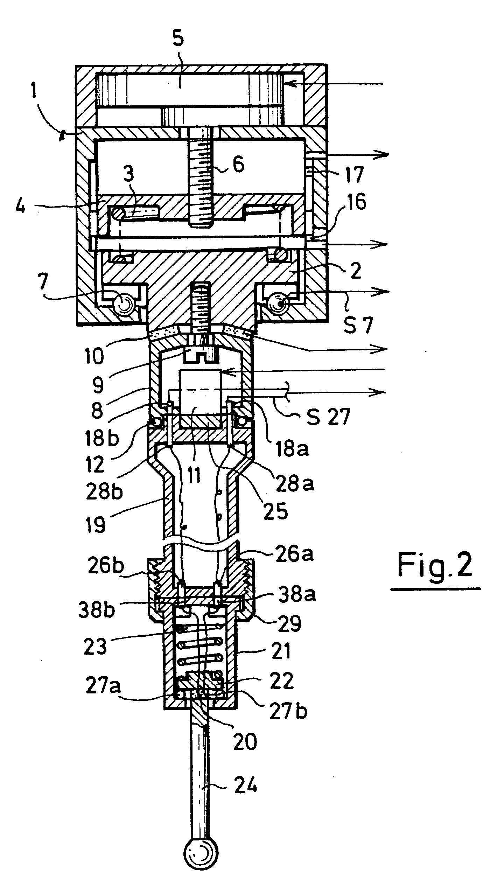

Im Innern der Taststiftaufnahme (8) befinden sich außerdem Kontaktstifte, von denen zwei (18a und 18b) dargestellt sind. Über die Funktion dieser Taststifte wird noch anhand von Fig. 2 ausgeführt werden. Bei eingewechseltem starren Taster, wie in Fig. 1 dargestellt, sind die Kontakte (18a und b) an Masse gelegt.

In der Darstellung nach Fig. 2 ist anstelle des starren Taststifts (14) ein kompletter "kleiner" schaltender Tastkopf (21) mit im Vergleich zum Tastkopf (1) sehr viel geringerem Durchmesser über ein Zwischenstück (19) an die Taststiftaufnahme (8) des schaltenden Tastkopfs (1) angesetzt.

Der Tastkopf (21) besitzt im Prinzip den gleichen Aufbau wie der Tastkopf (1). Er besitzt ein beweglich gelagertes Teil (22), das von einer Feder (23) gegen ein seine Nullage bestimmendes Dreipunktlager gedrückt wird. Auch hier bilden die Lagerkugeln (27) einen elektrischen Schaltkreis. Der Taststift (24) des Tastkopfs (21) ist über einen dazwischen gesetzten zweiten piezoelektrischen Sensor (20) mit dem Teil (22) verbunden.

Der Tastkopf (21) ist mit Hilfe einer Überwurfmutter (29) am Verlängerungsstück (19) angeschraubt. Dieses besitzt an seinem anderen Ende eine ferromagnetische Einlage (25) und wird vom Magnet (11) in der Taststiftaufnahme (8) des Zentraltastkopfes (1) gegen das Lager (12) der Tasterwechseleinrichtung gezogen.

Das Verlängerungsstück (19) enthält an beiden Seiten Gegenkontakte (28a,b und 26a,b), die die Signale des piezoelektrischen Sensors (20) und des aus den Lagerkugeln (27) gebildeten Schalters an die Gegenkontakte (18a,b) in der Taststiftaufnahme (8) im Tastkopf (1) weiterleiten.

In der Darstellung nach Fig. 1 befindet sich die Feder (3) im teilentspanntem Zustand und übt nur eine geringe Kraft von ca. 0,2 N auf den Taststiftträger (2) aus. In dieser Stellung der Feder arbeitet der Tastkopf (1) in herkömmlicher Weise als schaltender Tastkopf, wobei die eingestellte Federkraft die Antastkraft bestimmt, die vom Taststift (14) auf das zu vermessende Werkstück ausgeübt wird.

Bei eingewechseltem schaltenden Tastkopf (21) nach Fig. 2 ist die Feder (3) im Tastkopf (1) stärker zusammengedrückt. Der Taststiftträger (2) liegt hier mit einer Kraft von ca. 50 N auf seinem Lager auf. In dieser Einstellung besitzt der Tastkopf (1) nur noch die Funktion eines Kollisionsschutzes, d.h. das Teil (2) rastet aus dem Lager aus, wenn der Tastkpf (21) oder die Tastkopfverlängerung (19) unabsichtlich gegen ein Hindernis gefahren wird. Die eigentliche Antastung in der Einstellung nach Fig. 2 erfolgt mit Hilfe des Taststifts (24) des "kleinen" Tastkopfes (21).

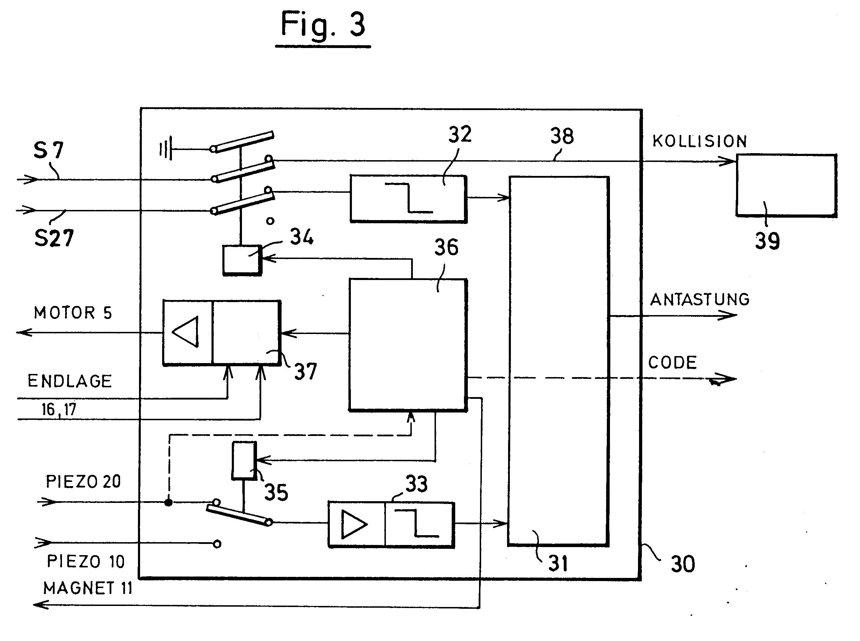

Zwischen den beiden Betriebsarten nach Fig. 1 und Fig. 2 wird mit Hilfe einer elektronischen Anordnung (30) umgeschaltet, der die Anschlußkabel des Motors (5), der Endlagenschalter (16 und 17) des schaltenden Lagers (7), des Wechselmagnets (11), und der Kontaktstifte (18a,b) zugeführt sind. Diese Anordnung (30) ist in Fig. 3 dargestellt und wird im Zusammenhang mit der nachfolgenden Erläuterung der Funktionsweise des Tastsystems beschrieben: Die Anordnung (30) enthält die Motorsteuerung (37) für den Motor (5) im Tastkopf (1). Die Motorsteuerung (37) ist mit einem Mikroprozessorsystem (36) verbunden und erhält von diesem die Steuersignale zur Einstellung der Federkraft der Feder (3). Die Motorsteuerung (37) ist außerdem mit den Endlagenschaltern (16 und 17) verbunden, die das Erreichen der oberen bzw. unteren Verstellgrenze für die Feder rückmelden.

Der Mikroprozessor (36) steuert gleichzeitig die Umschaltung der Tastsignale zwischen dem ersten und dem zweiten Tastkopf über die beiden Relais (34 und 35). Vom Relais (35) wird beim Umschaltvorgang wahlweise der piezoelektrische Sensor (20) im Tastkopf (21) oder der piezoelekrische Sensor (10) im Tastkopf (1) an den Eingang einer Verstärker und Impulsformerstufe (33) gelegt. Das Relais (34) legt in der Betriebsart nach Fig. 1 den Schalter (S7) des Lagers im Tastkopf (1) an den Eingang einer Triggerstufe (32). Beim Umschalten in die Betriebsart nach Fig. 2 verbindet das Relais (34) den Schaltkreis (S7) mit der Kollisionsschutzschaltung (39) des Koordinatenmeßgerätes.

Gleichzeitig wird der Schaltkreis (S27), d.h. das schaltende Lager im zweiten Tastkopf (21) an den Eingang der Triggerschaltung (32) gelegt. Die Ausgänge der Schaltungen (33 und 32) werden in einer Koinzidenzschaltung (31) zusmmengeführt, von der die eigentliche Tastimpulsfolge an das Koordinatenmeßgerät weitergegeben wird. Dieser Teil der Schaltung ist ansich bekannt und bereits Bestandteil der Elektronik des eingangs zum Stand der Technik genannten Tastkopfes.

Die Steuerung des Umschaltvorganges kann entweder vom Koordinatenmeßgerät über den Mikroprozessor (36) erfolgen, oder von diesem selbst initiiert werden, wenn eine Möglichkeit zur Erkennung des eingewechselten Teils vorgesehen ist. Hierzu dient die in Fig. 3 gestrichelt gezeichnete Kabelverbindung zwischen dem piezoelektrischen Sensor (20) und dem Mikroprozessor (36). Da die Kontakte (18a und 18b) beim eingewechseltem starren Taster (14) nach Fig. 1 an Masse gelegt sind, kann beispielsweise über eine Abfrage des Innenwiderstandes des angeschlossenen Kreises festgestellt werden, ob ein starrer Taststift (14) oder ein kleiner schaltender Taster (21) eingewechselt ist.

In der Darstellung nach Fig. 2 ist ein einzelner "kleiner" schaltender Taster (21) am Zentraltastkopf (1) über das Verlängerungsstück (19) angeschlossen. Es ist jedoch klar, daß auch mehrere kleine Tastköpfe über entsprechend als Verteiler ausgebildete Verbindungsstücke (19) angesetzt werden können. An dieser Stelle wird auf die eingangs bereits erwähnte Patentanmeldung P 36 34 689.6 verwiesen. Weiterhin ist es möglich, anstelle des schaltenden Zentraltasters (1) einen Tastkopf vom messenden Typ oder einen Universaltaster einzusetzen, der zwischen den beiden Betriebsarten

a: Verwendung zur Tastsignalgewinnung und

b: Verwendung als Kollisionsschutz bei angesetztem zweiten Tastkopf

umschaltbar ist. Schließlich ist es auch möglich in Umkehrung dieses Prinzips einen kleinen messenden Tastkopf an einen schaltenden Zentraltastkopf anzusetzen.

## Patentansprüche

1. Tastsystem für Koordinatenmeßgeräte mit einem Tastkopf, der eine Aufnahme (8) für auswechselbar daran befestigbare Taststifte (13) besitzt sowie einen Signalausgang für ein Antastsignal, dadurch gekennzeichnet, daß ein weiterer Tastkopf (23) mit im Vergleich zum ersten Tastkopf (1) verringerten Abmessungen vorgesehen und an der Taststiftaufnahme (8) des ersten Tastkopfs (1) befestigbar ist, der ebenfalls einen Signalausgang für ein Antastsignal besitzt, und daß eine Anordnung (30), die bei eingewechseltem zweiten Tastkopf mit den Signalausgängen beider Tastköpfe verbunden ist, zur Umschaltung zwischen zwei Betriebsarten, in denen die Signalausgänge für die Antastsignale des ersten oder die des zweiten Kopfes an das Koordinatenmeßgerät gekoppelt sind, vorgesehen ist.

2. Tastsystem nach Anspruch 1, dadurch gekennzeichnet, daß die Anordnung (30) mit einer Einrichtung (4 - 6) zur Änderung der Vorspannkraft im ersten Tastkopf (1) verbunden ist.

3. Tastsystem nach Anspruch 1, dadurch gekennzeichnet, daß beide Tastköpfe (1, 21) vom schaltenden Typ sind und jeweils einen berührungsempfindlichen Sensor (10, 20) und einen bei Taststiftauslenkung ansprechenden Schalter (S7, S27) enthalten.

4. Tastsystem nach Anspruch 1, dadurch gekennzeichnet, daß der bei Taststiftauslenkung ansprechende Schalter (S7) im ersten Tastkopf mit einer Anordnung (39) zur Stillsetzung eines mit dem Tastsystem ausgerüsteten Koordinatenmeßgerätes verbindbar ist.

5. Tastsystem nach Anspruch 1, dadurch gekennzeichnet, daß die Taststiftaufnahme (8) im ersten Tastkopf (1) eine elektrisch ansprechbare Wechseleinrichtung (11) sowie Kontakte (18a,b) zur Übertragung der Antastsignale des zweiten Tastkopfes (21) enthält.

6. Tastsystem nach Anspruch 1, dadurch gekennzeichnet, daß die Anordnung (30) mit einer Schaltung (36) zur Erkennung des an der Aufnahme befestigten Teils versehen ist.

7. Tastsystem nach Anspruch 1, dadurch gekennzeichnet, daß ein Verlängerungsstück (19) vorgesehen ist, zur Verbindung des zweiten Tastkopf (21) mit der Aufnahme (8) am ersten Tastkopf (1).

8. Tastsystem nach Anspruch 7, dadurch gekennzeichnet, daß das Verlängerungsstück (19) das gleichzeitige Ansetzen mehrerer Tastköpfe erlaubt.

9. Verfahren zum Betrieb eines Tastsystems für Koordinatenmeßgeräte, das zwei Tastköpfe (1, 21) mit unterschiedlichen Abmessungen umfaßt, dadurch gekennzeichnet, daß der zweite Tastkopf (21) mit den kleineren Abmessungen an einer auslenkbaren Taststiftaufnahme (8) des ersten Tastkopfes (1) befestigt wird, daß Tastsignale (S27, Piezo 20) des zweiten Tastkopfes anstelle der (S7, Piezo 10) des ersten Tastkopfes (1) dem Koordinatenmeßgerät zugeführt werden, und daß die Vorspannung (3) der auslenkbaren Aufnahme (8) im ersten Tastkopf (1) erhöht wird.

10. Verfahren nach Anspruch 9, dadurch gekennzeichnet, daß die Tastsignale (S7) des ersten Tastkopfes (1) bei angesetztem zweiten Tastkopf (21) zur Steuerung der Kollisionsschutzschaltung (39) des Koordinatenmeßgerätes verwendet werden.

11. Tastsystem nach Anspruch 1, dadurch gekennzeichnet, daß der erste Tastkopf ein Tastkopf vom messenden Typ und der zweite Tastkopf ein Tastkopf vom schaltenden Typ ist.

12. Tastsystem nach Anspruch 1, dadurch gekennzeichnet, daß der erste Tastkopf ein Tastkopf vom schaltenden Typ und der zweite Tastkopf ein Tastkopf vom messenden Typ ist.

**Claims**

1. A probe system for coordinate-measuring instruments wherein a probe head includes a receptacle (8) for interchangeably mounted probe pins (13) and a signal output for producing a probe signal, the improvement wherein an auxiliary probe head (23) is provided having smaller dimensions compared to said first probe head, said auxiliary probe head being adapted for mounting to said receptacle (8) and having also a signal output producing a probe signal, and associated electronics (30) connected to said signal outputs of both probe heads, when said auxiliary probe head is mounted, for switching between two modes, in which modes the signal outputs for the probe signals either of said first probe head or of said auxiliary probe head are connected to the coordinate measuring instrument.

2. The probe system of claim 1, wherein said electronics (30) is connected to a device (4-6) for varying the biasing force of the first probe head (1).

3. The probe system of claim 1, wherein both probe heads (1, 21) are of the switching type and each of them contains a contact-responsive sensor (10, 20) and a switch (S7) responsive to deflection of the probe pin.

4. The probe system of claim 2, in which said switch (S7) responsive to deflection in the first probe head can be connected to circuit means (39) for stopping the coordinate measuring instrument carrying said probe system.

5. The probe system of claim 1, wherein said receptacle (8) includes electrically operated chucking means (11) and contacts (18a, b) for outputting transfer of the output signal of said auxiliary probe head (21).

6. The probe system of claim 1, wherein said associated electronics (30) includes electronic means for recognizing the part mounted to said receptacle.

7. The probe system of claim 1, wherein an extension member is provided for connecting the auxiliary probe head (21) to said receptacle (8) at the first probe head (1).

8. The probe system of claim 7, wherein said extension member comprises separate means for mounting each of a plurality of auxiliary probe heads simultaneously.

9. A method of operating a probe system for coordinate-measuring instruments comprising two probe heads (1, 21) having different dimensions, characterized by the fact that the second probe head (21) which has the smaller dimensions is mounted to the deflectable probe-pin receptacle (8) of the first probe head (1) having the larger dimensions; that the probe signals (S27, piezo 20) of the smaller probe head are fed to the coordinate-measuring instrument instead of the probe signals (S7, piezo 10) of the larger probe (1) and that the biasing force of the deflectable receptacle (8) of the first probe head is increased.

10. A method according to claim 9, characterized by the fact that the probe signals (S7) of the first probe head (1) are used for controlling a collisions-protection circuit (39) of the coordinate-measuring instrument, as long as the smaller probe head is mounted.

11. The probe system of claim 1 wherein the first probe head is a measuring probe and the second probe head is a probe of the switching type.

12. The probe system of claim 1 wherein the first probe head is a switching probe and the second probe head is a probe of the measuring type.

**Revendications**

1. Système palpeur pour des appareils de mesure de coordonnées, comportant une tête de palpage, qui possède un logement (8) pour des palpeurs (13) pouvant être fixés dans ce logement de manière à pouvoir être remplacés, ainsi qu'une sortie pour un signal de palpage, caractérisé en ce qu'il est prévu une autre tête de palpage (23) possédant des dimensions réduites par rapport à la première tête de palpage (1) et qui peut être fixée au logement (8) des palpeurs de la première tête de palpage (1) et possède également une sortie pour un signal de palpage, et qu'il est prévu un dispositif (30) qui, lors de la commutation sur la seconde tête de palpage, est raccordé aux sorties des signaux des deux têtes de palpage, pour réaliser la commutation entre deux types de fonctionnement, dans lesquels les sorties pour les signaux de palpage de la première tête ou pour les signaux de palpage de la seconde tête sont accouplées à l'appareil de mesure de coordonnées.

2. Système palpeur selon la revendication 1, caractérisé en ce que le dispositif (30) est raccordé à un dispositif (4-6) servant à modifier la force de précontrainte dans la première tête de palpage (1).

3. Système palpeur selon la revendication 1, caractérisé en ce que les deux têtes de palpage (1,21) sont du type à commutation et contiennent chacune un capteur (10,20) sensible à un contact (S7,S27) répondant à une déviation d'un palpeur.

4. Système palpeur selon la revendication 1, caractérisé en ce que l'interrupteur (S7), qui répond lors d'une déviation d'un palpeur, dans la première tête de palpage peut être raccordé à un dispositif (39) servant à arrêter un appareil de mesure de coordonnées équipé du système palpeur.

5. Système palpeur selon la revendication 1, caractérisé en ce que le logement (8) des palpeurs situé dans la première tête de palpage (1) contient un dispositif changeur (11) pouvant répondre électriquement, ainsi que des contacts (18a,b) pour transmettre les signaux de palpage de la seconde tête de palpage (21).

6. Système palpeur selon la revendication 1, caractérisé en ce que le dispositif (30) est équipé d'un circuit (36) servant à identifier la partie fixée au logement.

7. Système palpeur selon la revendication 1, caractérisé en ce qu'il est prévu un élément prolongateur destiné à raccorder la seconde tête de palpage (21) au logement (8) sur la première tête de palpage (1).

**8.** Système palpeur selon la revendication 7, caractérisé en ce que l'élément prolongateur (19) permet la mise en place simultanée de plusieurs têtes de palpage.

**9.** Procédé pour faire fonctionner un appareil palpeur pour des appareils de mesure de coordonnées, qui comprend deux têtes de palpage (1,21) possédant des dimensions différentes, caractérisé en ce que la seconde tête de palpage (21), qui possède les dimensions les plus petites, est fixée à un logement (8) des palpeurs, qui peut être dévié, de la première tête de palpage (1), que des signaux de palpage (S27, Piézo 20) de la seconde tête de palpage sont envoyés, à la place des signaux de palpage (S7, Piézo 10) de la première tête de palpage (1), à l'appareil de mesure de coordonnées et que la précontrainte (3) du logement (8), qui peut être déviée, dans la première tête de palpage (1) est accrue.

**10.** Procédé selon la revendication 9, caractérisé en ce que les signaux de palpage (S7) de la première tête de palpage (1) sont utilisés, lorsque la seconde tête de palpage (21) est installée, pour commander le circuit de protection anti-collision (39) de l'appareil de mesure de coordonnées.

**11.** Système palpeur selon la revendication 1, caractérisé en ce que la première tête de palpage est une tête de palpage du type effectuant la mesure et que la seconde tête de palpage est une tête de palpage à commutation.

**12.** Système palpeur selon la revendication 1, caractérisé en ce que la première tête de palpage est une tête de palpage à commutation et la seconde tête de palpage est une tête de palpage du type exécutant la mesure.

# Fig. 1

## Fig.2

# Fig. 3

S7

S27

KOLLISION

32    38

39

MOTOR 5

34

36

ENDLAGE

16,17

37

ANTASTUNG

CODE

PIEZO 20

35

33

PIEZO 10

31    30

MAGNET 11

EP 0 304 881 B1